# FASCICULE DE BREVET EUROPEEN

(11) **EP 3 859 174 B1**
(45) Date de publication et mention de la délivrance du brevet: **05.03.2025**
(21) Numéro de dépôt: 21151476.5
(22) Date de dépôt: 14.01.2021
(51) Int. Cl.: F16B 39/12, F16B 5/02

(54) **ECROU COMPORTANT UNE RONDELLE PIVOTANTE PRÉSENTANT UN ORIFICE DE PASSAGE EXCENTRÉ, BOULON COMPRENANT LEDIT ÉCROU ET ASSEMBLAGE COMPRENANT AU MOINS UN TEL BOULON**
MUTTER, DIE EINE SCHWENKBARE UNTERLEGSCHEIBE MIT EINER EXZENTRISCHEN DURCHGANGSÖFFNUNG UMFASST, DIESE MUTTER UMFASSENDER BOLZEN UND BAUGRUPPE, DIE MINDESTENS EINEN SOLCHEN BOLZEN UMFASST
NUT COMPRISING A PIVOTING WASHER HAVING AN OFF-CENTRE OPENING FOR MOVEMENT, BOLT COMPRISING SAID NUT AND ASSEMBLY COMPRISING AT LEAST ONE SUCH BOLT

(30) Priorité: 31.01.2020 FR 2000945
(43) Date de publication de la demande: 04.08.2021
(73) Titulaire: Airbus Operations SAS, 31060 Toulouse (FR)
(72) Inventeur: RAFIK, Vincent, 31060 TOULOUSE (FR); CHIROL, Clément, 31060 TOULOUSE (FR)
(74) Mandataire: Fantin, Laurent

(56) Documents cités:
- EP-A1- 0 362 132
- CN-A- 108 799 303
- CN-U- 203 796 716
- CN-Y- 2 871 950
- GB-A- 108 435
- GB-A- 191 209 274

## Description

La présente demande se rapporte à un écrou comportant une rondelle pivotante présentant un orifice de passage excentré, à un boulon comprenant ledit écrou ainsi qu'à un assemblage comprenant au moins un tel boulon.

Selon un mode de réalisation de l'art antérieur, un assemblage comprend au moins deux pièces, maintenues assemblées par au moins un boulon qui comporte une vis, ainsi qu'un écrou configuré pour se visser sur la vis et prendre appui en fonctionnement contre une face de contact d'une des pièces de l'assemblage. Lors du montage, le boulon est serré de manière à exercer une précharge déterminée sur les pièces de l'assemblage.

En fonctionnement, un desserrement intempestif du boulon, en raison de la rotation de la vis ou de l'écrou, induit une perte de précharge affectant les performances mécaniques de l'assemblage.

Selon des modes de réalisation décrits dans les documents CN2871950, CN203796716, GB09274, CN108799303 et EP362132, un assemblage comprend un premier écrou principal et un deuxième écrou secondaire présentant des taraudages identiques pour se visser sur une tige filetée. Les premier et deuxième écrous comprennent des portées coaxiales qui coopèrent entre elles et qui sont excentrées par rapport aux taraudages. Ces deux portées sont reliées entre elles par un vissage qui présente un pas différent de celui des taraudages. Ces modes de réalisation ne sont pas pleinement satisfaisants car il est très difficile de visser simultanément les deux écrous qui présentent des taraudages.

Le document GB108435 propose un assemblage comprenant une tige filetée, un écrou configuré pour se visser sur la tige filetée ainsi qu'une rondelle qui présente un trou traversant lisse pour loger la tige filetée ainsi qu'une portée excentrée coopérant avec une portée excentrée ou non de l'écrou. Ce système de blocage ne convient pas car la rondelle peut se désolidariser de l'écrou en présence de vibrations.

La présente invention vise à remédier à tout ou partie des inconvénients de l'art antérieur en proposant une solution limitant les risques de rotation de l'écrou. L'invention est un écrou selon la revendication 1.

A cet effet, l'invention a pour objet un écrou comprenant un corps comportant un trou traversant présentant au moins un tronçon intérieur taraudé configuré pour permettre de visser l'écrou sur une tige en fonctionnement ainsi qu'un tronçon de pivotement cylindrique présentant un axe de pivotement. En complément, l'écrou comprend une rondelle comportant un tronçon de pivotement configuré pour coopérer avec le tronçon de pivotement du corps afin que la rondelle puisse pivoter par rapport au corps ainsi qu'un orifice traversant comprenant un premier tronçon intérieur lisse présentant un axe, le tronçon de pivotement de la rondelle présentant un axe de pivotement excentré par rapport à l'axe du premier tronçon intérieur de la rondelle et/ou le tronçon intérieur taraudé du corps présentant un axe de vissage excentré par rapport à l'axe de pivotement du tronçon de pivotement du corps, le premier tronçon intérieur de la rondelle comprenant une section telle que lorsqu'une tige est vissée dans le tronçon intérieur taraudé en fonctionnement, le premier tronçon intérieur n'interfère pas avec la tige dans au moins une première position angulaire de la rondelle et interfère avec la tige dans au moins une deuxième position angulaire de la rondelle.

Selon l'invention, les tronçons de pivotement du corps et de la rondelle sont coaxiaux et reliés par une liaison limitant les mouvements de translation selon une direction parallèle à l'axe de pivotement.

Cette solution permet de pouvoir bloquer en rotation l'écrou d'un boulon de manière sûre lorsque le premier tronçon intérieur de la rondelle interfère avec la tige du boulon.

Selon l'invention le tronçon de pivotement du corps est fileté ou taraudé et le tronçon de pivotement de la rondelle est taraudé ou fileté pour permettre un vissage de la rondelle sur le corps.

Selon un premier mode de réalisation, l'orifice traversant comprend un deuxième tronçon intérieur formant le tronçon de pivotement de la rondelle.

Selon ce premier mode de réalisation, la rondelle comprend une surface périphérique extérieure configurée pour permettre de faire pivoter la rondelle à l'aide d'un outil.

Selon un deuxième mode de réalisation, la rondelle comprend une surface périphérique extérieure présentant au moins un tronçon extérieur formant le tronçon de pivotement de la rondelle.

Selon ce deuxième mode de réalisation, la surface périphérique extérieure est configurée pour permettre de faire pivoter la rondelle à l'aide d'un outil.

Selon une autre caractéristique, la surface périphérique extérieure comprend au moins une portion extérieure à section polygonale.

Selon une autre caractéristique, le corps et/ou la rondelle comprennent au moins un épaulement pour former une butée limitant la course de la rondelle par rapport au corps selon une direction parallèle à l'axe de pivotement.

L'invention a également pour objet un boulon comportant une tige avec un tronçon fileté ainsi qu'un écrou selon l'une des caractéristiques précédentes.

L'invention a également pour objet un assemblage comprenant un tel boulon.

D'autres caractéristiques et avantages ressortiront de la description de l'invention qui va suivre, description donnée à titre d'exemple uniquement, en regard des dessins annexés parmi lesquels :
- La figure 1 est une vue latérale d'un écrou illustrant un premier mode de réalisation de l'invention,
- La figure 2 est une coupe selon la ligne II-II de la figure 1 de l'écrou,
- La figure 3 est une vue de dessus de l'écrou visible sur la figure 1,
- La figure 4 est une coupe d'un assemblage comportant un boulon en cours de montage illustrant un premier mode de réalisation de l'invention,
- La figure 5 est une coupe de l'assemblage visible sur la figure 4, l'écrou étant serré et non bloqué,
- La figure 6 est une coupe de l'assemblage visible sur la figure 4, l'écrou étant serré et bloqué en rotation,
- La figure 7 est une vue en perspective d'un écrou illustrant un premier mode de réalisation de l'invention,
- La figure 8 est une vue de dessus du boulon visible sur la figure 5, l'écrou étant serré et non bloqué en rotation,
- La figure 9 est une vue de dessus du boulon visible sur la figure 6, l'écrou étant serré et bloqué en rotation, et
- La figure 10 est une coupe d'un écrou illustrant un deuxième mode de réalisation de l'invention.

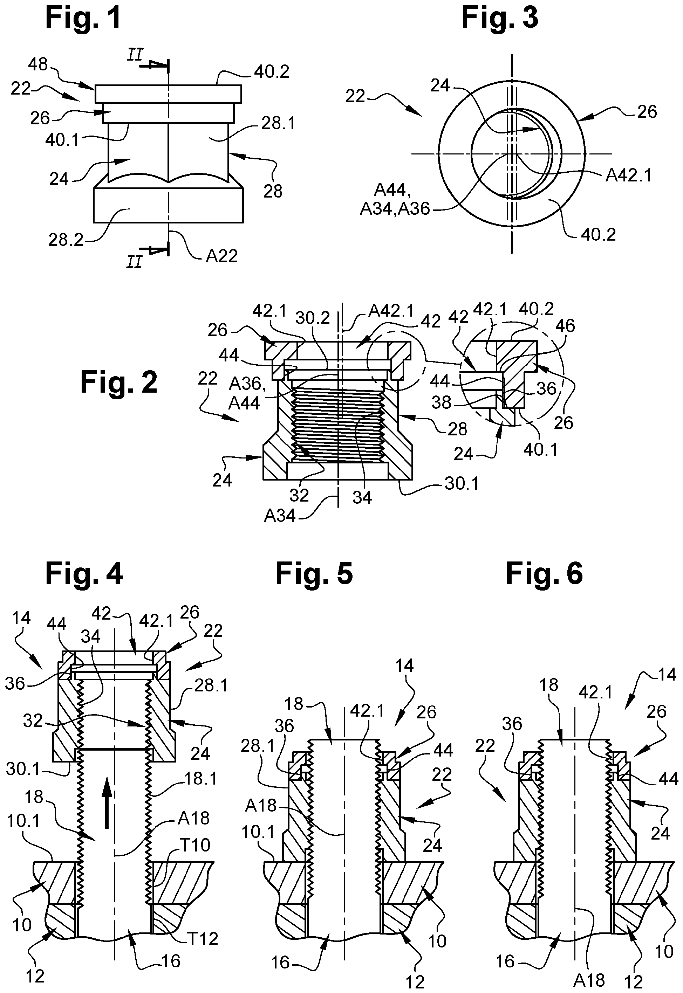

Selon un mode de réalisation visible sur les figures 4 à 7, un assemblage comprend au moins des première et deuxième pièces 10, 12 ainsi qu'au moins un boulon 14 maintenant les première et deuxième pièces 10, 12 assemblées. L'assemblage peut comprendre plus de deux pièces 10, 12.

Selon une configuration, le boulon 14 comprend une vis 16 présentant une tige 18 ainsi qu'une tête solidaire d'une première extrémité de la tige 18. Selon une autre configuration, le boulon 14 comprend une tige 18, sans tête, sous la forme d'un goujon, se vissant dans l'une des première et deuxième pièces 10, 12.

Quelle que soit la configuration, la tige 18 présente un tronçon fileté 18.1 en saillie par rapport à une face de contact 10.1 d'une première pièce 10 de l'assemblage en fonctionnement. Selon une configuration, le tronçon fileté 18.1 s'étend sur toute la longueur de la tige 18. Selon une autre configuration, le tronçon fileté 18.1 ne s'étend pas sur toute la longueur de la tige 18 mais seulement sur une partie de la tige 18 en saillie par rapport à la face de contact 10.1.

En fonctionnement, la tige 18 présente un axe A18 approximativement perpendiculaire à la face de contact 10.1.

Chaque pièce 10, 12 de l'assemblage comprend un trou de passage T10, T12 pour loger la tige 18 du boulon 14.

Le boulon 14 comprend un écrou 22 comportant un corps 24 ainsi qu'une rondelle 26 mobile en rotation par rapport au corps 24 selon un axe de pivotement parallèle ou confondu avec l'axe A18 de la tige 18 lorsque l'écrou 22 est vissé sur la tige 18. Ainsi, en pivotant, la rondelle 26 peut occuper plusieurs positions angulaires par rapport au corps 24.

Le corps 24 comprend une surface périphérique extérieure 28, des première et deuxième faces terminales 30.1, 30.2 ainsi qu'un trou traversant 32 débouchant au niveau des première et deuxième faces terminales 30.1, 30.2. Ces dernières sont approximativement parallèles entre elles.

En fonctionnement, la première face terminale 30.1 est plaquée contre la face de contact 10.1 de la première pièce 10 de l'assemblage ou contre une rondelle intercalée entre l'écrou 22 et la face de contact 10.1.

Le trou traversant 32 comprend au moins un tronçon intérieur 34 taraudé, configuré pour coopérer avec le tronçon fileté 18.1 de la tige 18 et permettre un vissage du corps 24 de l'écrou 22 sur la tige 18. Ce tronçon intérieur 34 taraudé présente un axe de vissage A34. Selon une configuration, les première et deuxième faces terminales 30.1, 30.2 sont perpendiculaires à l'axe de vissage A34 du tronçon intérieur 34 taraudé du trou traversant 32. En fonctionnement, cet axe de vissage A34 est confondu avec l'axe A18 de la tige 18 lorsque l'écrou 22 est vissé sur la tige 18.

La surface périphérique extérieure 28 est configurée pour permettre de faire pivoter le corps 24 de l'écrou 22 à l'aide d'un outil. Selon une configuration, la surface périphérique extérieure 28 comprend au moins un premier tronçon extérieur 28.1 à section polygonale, comme une section hexagonale par exemple. Selon une configuration, la surface périphérique extérieure 28 comprend un premier tronçon extérieur 28.1 à section polygonale ainsi qu'un deuxième tronçon extérieur 28.2 cylindrique qui présente une section supérieure au premier tronçon extérieur 28.1 à section polygonale.

Selon un premier mode de réalisation visible sur les figures 1 à 9, la surface périphérique extérieure 28 du corps 24 comprend un tronçon de pivotement 36 présentant une surface cylindrique et un axe de pivotement A36, confondu ou parallèle à l'axe de vissage A34 du tronçon intérieur 34 taraudé. Selon une configuration, le tronçon de pivotement 36 s'étend à partir de la deuxième face terminale 30.2. Le tronçon de pivotement 36 a une section inférieure à celle du premier tronçon extérieur 28.1 à section polygonale de sorte que la surface périphérique extérieure 28 présente un premier épaulement 38 reliant le tronçon de pivotement 36 et le premier tronçon extérieur 28.1 à section polygonale. Ce premier épaulement 38 est perpendiculaire à l'axe de pivotement A36. Il peut former une butée limitant la course de la rondelle 26 par rapport au corps 24 selon une direction parallèle à l'axe de pivotement A36.

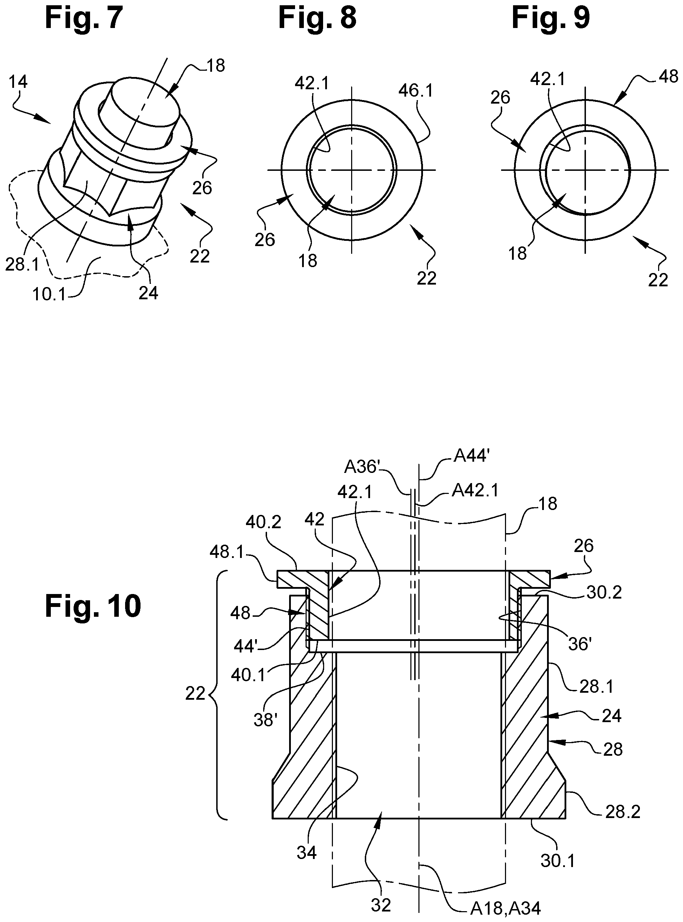

Selon un deuxième mode de réalisation visible sur la figure 10, le trou traversant 32 comprend, en plus du tronçon intérieur 34 taraudé, un tronçon de pivotement 36' présentant une surface cylindrique et un axe de pivotement A36', parallèle ou confondu avec l'axe de vissage A34 du tronçon intérieur 34 taraudé. Selon une configuration, le tronçon de pivotement 36' s'étend à partir de la deuxième face terminale 30.2. Le tronçon de pivotement 36' a une section supérieure à celle du tronçon intérieur 34 taraudé de sorte que le trou traversant 32 présente un premier épaulement 38' reliant le tronçon de pivotement 36' et le tronçon intérieur 34 taraudé. Ce premier épaulement 38' est perpendiculaire à l'axe de pivotement A36'. Il peut former une butée limitant la course de la rondelle 26 par rapport au corps 24 selon une direction parallèle à l'axe de pivotement A36'. Quel que soit le mode de réalisation, le corps 24 comprend un tronçon de pivotement 36, 36' présentant un axe de pivotement A36, A36'.

La rondelle 26 présente des première et deuxième faces transversales 40.1, 40.2, un orifice traversant 42 débouchant au niveau des première et deuxième faces transversales 40.1, 40.2.

Selon une configuration, les première et deuxième faces transversales 40.1, 40.2 sont parallèles entre elles, la première face transversale 40.1 étant orientée vers le corps 24.

Selon le premier mode de réalisation, l'orifice traversant 42 comprend un premier tronçon intérieur 42.1, formant un orifice de passage, s'étendant à partir de la deuxième face transversale 40.2 et présentant un axe A42.1 ainsi qu'un deuxième tronçon intérieur 44 cylindrique, s'étendant à partir de la première face transversale 40.1, configuré pour coopérer avec le tronçon de pivotement 36 du corps 24 afin que la rondelle 26 puisse pivoter selon l'axe de pivotement A36 par rapport au corps 24, le deuxième tronçon intérieur 44 présentant un axe A44 parallèle ou confondu avec l'axe A42.1 du premier tronçon intérieur 42.1.

Selon une configuration, le premier tronçon intérieur 42.1 a une section inférieure à celle du deuxième tronçon intérieur 44 et les premier et deuxième tronçons intérieurs 42.1, 44 sont reliés par un deuxième épaulement 46, perpendiculaire aux axes A42.1, A44 des premier et deuxième tronçons intérieurs 42.1, 44. Ce deuxième épaulement 46 peut former une butée limitant la course de la rondelle 26 par rapport au corps 24 selon une direction parallèle à l'axe de pivotement A36.

Selon le premier mode de réalisation, la rondelle 26 comprend une surface périphérique extérieure 48 configurée pour permettre de faire pivoter la rondelle 26 de l'écrou 22 à l'aide d'un outil. Selon une configuration, la surface périphérique extérieure 48 comprend au moins une portion extérieure à section polygonale, comme une section hexagonale par exemple.

Selon le deuxième mode de réalisation, l'orifice traversant 42 comprend au moins un premier tronçon intérieur 42.1, formant un orifice de passage, s'étendant entre les première et deuxième faces transversales 40.1, 40.2 et présentant un axe A42.1. En complément, la rondelle 26 comprend une surface extérieure 48 présentant au moins un tronçon extérieur 44' cylindrique, s'étendant à partir de la première face transversale 40.1, configuré pour coopérer avec le tronçon de pivotement 36' du corps 24 afin que la rondelle 26 puisse pivoter selon l'axe de pivotement A36' par rapport au corps 24, le tronçon extérieur 44' présentant un axe A44' parallèle ou confondu avec l'axe A42.1 du premier tronçon intérieur 42.1.

Selon le deuxième mode de réalisation, la surface périphérique extérieure 48 est configurée pour permettre de faire pivoter la rondelle 26 de l'écrou 22 à l'aide d'un outil. Selon une configuration, la surface périphérique extérieure 48 comprend, en plus du tronçon extérieur 44', au moins une portion extérieure 48.1 à section polygonale, comme une section hexagonale par exemple.

Quel que soit le mode de réalisation, la rondelle 46 comprend :
- un trou traversant 42 qui présente un premier tronçon intérieur 42.1 lisse formant un orifice de passage et présentant un axe A42.1,
- un tronçon de pivotement 44, 44' cylindrique configuré pour coopérer avec le tronçon de pivotement 36, 36' du corps 24 afin que la rondelle 26 puisse pivoter selon l'axe de pivotement A36, A36' par rapport au corps 24.

Selon le premier mode de réalisation, le tronçon de pivotement 44 de la rondelle 26 correspond à un deuxième tronçon intérieur du trou traversant 42. Selon le deuxième mode de réalisation, le tronçon de pivotement 44' de la rondelle 26 correspond à un tronçon extérieur de la surface périphérique extérieure 48 de la rondelle 26.

Selon une caractéristique de l'invention, l'axe A42.1 du premier tronçon intérieur 42.1 de la rondelle 26 est excentré par rapport à l'axe A44, A44' du tronçon de pivotement 44, 44' de la rondelle 26 et/ou l'axe de vissage A34 du tronçon intérieur 34 taraudé du corps 24 est excentré par rapport à l'axe de pivotement A36, A36' du tronçon de pivotement 36, 36' du corps 24.

Selon une configuration visible sur la figure 2, l'axe de vissage A34 du tronçon intérieur 34 taraudé et l'axe de pivotement A36 du tronçon de pivotement du corps 24 sont confondus. En complément, l'axe A42.1 du premier tronçon intérieur 42.1 de la rondelle 26 est excentré par rapport à l'axe A44 du tronçon de pivotement 44 de la rondelle 26.

Selon une autre configuration, l'axe A42.1 du premier tronçon intérieur 42.1 et l'axe A44, A44' du tronçon de pivotement 44, 44' de la rondelle 26 sont confondus. En complément, l'axe de vissage A34 du tronçon intérieur 34 taraudé du corps 24 est excentré par rapport à l'axe de pivotement A36, A36' du tronçon de pivotement 36, 36' du corps 24.

Selon une autre configuration visible sur la figure 10, l'axe A42.1 du premier tronçon intérieur 42.1 de la rondelle 26 est excentré par rapport à l'axe A44' du tronçon de pivotement 44' de la rondelle 26 et l'axe de vissage A34 du tronçon intérieur 34 taraudé du corps 24 est excentré par rapport à l'axe de pivotement A36' du tronçon de pivotement 36' du corps 24.

Quelle que soit la configuration, la rondelle 26 peut pivoter par rapport au corps 24 afin d'occuper différentes positions angulaires, la rondelle 26 présentant un orifice de passage excentré par rapport à l'axe de vissage A34 du tronçon intérieur 34 taraudé du corps 24. Selon un mode de réalisation, le premier tronçon intérieur 42.1 du trou traversant 42 de la rondelle 26 est lisse et de préférence cylindrique. Selon un autre mode de réalisation, la surface du premier tronçon intérieur 42.1 présente un état de surface permettant d'obtenir un coefficient de frottement important entre le premier tronçon intérieur 42.1 et la tige 18. Le premier tronçon intérieur 42.1 comprend une section telle que le premier tronçon intérieur 42.1 n'interfère pas avec la tige 18 et autorise son passage dans au moins une première position angulaire de la rondelle 26, comme illustré sur les figures 5, 8 et 10, et interfère avec la tige 18 dans au moins une deuxième position angulaire de la rondelle 26, comme illustré sur les figures 6 et 9, compte tenu de l'excentration de l'axe A42.1 du premier tronçon intérieur 42.1 de la rondelle 26 par rapport à l'axe de vissage A34 du tronçon intérieur 34 taraudé du corps 24.

Selon un mode de réalisation, le tronçon de pivotement 36, 36' du corps 24 est fileté (ou taraudé) et le tronçon de pivotement 44, 44' de la rondelle 26 est taraudé (ou fileté) pour permettre un vissage de la rondelle 26 sur le corps 24.

Selon un autre mode de réalisation, le tronçon de pivotement 36, 36' du corps 24 et le tronçon de pivotement 44, 44' de la rondelle 26 sont lisses et présentent des diamètres sensiblement égaux de manière à obtenir une liaison pivotante entre la rondelle 26 et le corps 24. En complément, l'écrou 22 comprend un système d'immobilisation de la rondelle 26 par rapport au corps 24, en translation selon une direction parallèle à l'axe de pivotement A36, A36', comme un circlips se logeant à cheval dans des gorges prévues au niveau du tronçon de pivotement 36, 36' du corps 24 et du tronçon de pivotement 44, 44' de la rondelle 26.

Quel que soit le mode de réalisation, les tronçons de pivotement du corps et de la rondelle 36, 36', 44, 44' sont coaxiaux en fonctionnement et reliés par une liaison limitant les mouvements de translation selon une direction parallèle à l'axe de pivotement A36, A36'. Cette solution permet d'obtenir une liaison sûre entre le corps 24 et la rondelle 26 limitant les risques de désolidarisation en présence de vibrations. La liaison entre les tronçons de pivotement du corps et de la rondelle 36, 36', 44, 44' est une liaison hélicoïdale.

Le principe de fonctionnement de l'écrou est décrit au regard des figures 4 à 6, 8 et 9.

Lors d'une première étape, la tige 18 est mise en place de manière à ce que son tronçon fileté 18.1 soit en saillie par rapport à une face de contact 10.1 d'une première pièce 10 d'un assemblage.

Lors d'une deuxième étape, la rondelle 26 étant positionnée par rapport au corps 24 de sorte que le premier tronçon intérieur 42.1 n'interfère pas avec la tige 18 et autorise son passage, l'écrou 22 est vissé sur la tige 18 en partant de l'extrémité libre de la tige 18, comme illustré sur la figure 4, jusqu'à ce que le corps 24 soit en contact avec la face de contact 10.1, comme illustré sur la figure 5. L'écrou 22 est alors serré, de manière à induire une précharge souhaitée, en utilisant une clé engagée sur le premier tronçon extérieur 28.1 à section polygonale du corps 24 de l'écrou.

Lorsque l'écrou 22 est serré, la rondelle 26 est vissée ou pivotée par rapport au corps 24, en utilisant une clé engagée sur la portion extérieure 48.1 à section polygonale de la rondelle 26, jusqu'à ce que le premier tronçon intérieur 42.1 interfère avec la tige 18, comme illustré sur les figures 6 et 9. Dès lors, l'écrou 22 est serré et bloqué en rotation par rapport à la tige 18.

## Revendications

1. Ecrou (22) comprenant un corps (24) comportant un trou traversant (32) présentant au moins un tronçon intérieur (34) taraudé configuré pour permettre de visser l'écrou sur une tige (18) en fonctionnement ainsi qu'un tronçon de pivotement (36, 36') cylindrique présentant un axe de pivotement (A36, A36'), l'écrou (22) comprenant une rondelle (26) comportant un tronçon de pivotement (44, 44') configuré pour coopérer avec le tronçon de pivotement (36, 36') du corps (24) afin que la rondelle (26) puisse pivoter par rapport au corps (24) ainsi qu'un orifice traversant (42) comprenant un premier tronçon intérieur (42.1) lisse présentant un axe (A42.1), le tronçon de pivotement (44, 44') de la rondelle (26) présentant un axe de pivotement (A44, A44') excentré par rapport à l'axe (A42.1) du premier tronçon intérieur (42.1) de la rondelle (26) et/ou le tronçon intérieur (34) taraudé du corps (24) présentant un axe de vissage (A34) excentré par rapport à l'axe de pivotement (A36, A36') du tronçon de pivotement (36, 36') du corps (24), le premier tronçon intérieur (42.1) de la rondelle (26) comprenant une section telle que lorsqu'une tige (18) est vissée dans le tronçon intérieur (34) taraudé en fonctionnement, le premier tronçon intérieur (42.1) n'interfère pas avec la tige (18) dans au moins une première position angulaire de la rondelle (26) et interfère avec la tige (18) dans au moins une deuxième position angulaire de la rondelle (26), les tronçons de pivotement du corps et de la rondelle (36, 36', 44, 44') étant coaxiaux en fonctionnement, **caractérisé en ce que** le tronçon de pivotement (36, 36') du corps (24) est fileté ou taraudé et **en ce que** le tronçon de pivotement (44, 44') de la rondelle (26) est taraudé ou fileté pour permettre un vissage de la rondelle (26) sur le corps (24).

2. Ecrou (22) selon la revendication 1, **caractérisé en ce que** l'orifice traversant (42) comprend un deuxième tronçon intérieur formant le tronçon de pivotement (44) de la rondelle (26).

3. Ecrou (22) selon la revendication précédente, **caractérisé en ce que** la rondelle (26) comprend une surface périphérique extérieure (48) configurée pour permettre de faire pivoter la rondelle (26) à l'aide d'un outil.

4. Ecrou (22) selon la revendication 1, **caractérisé en ce que** la rondelle (26) comprend une surface périphérique extérieure (48) présentant au moins un tronçon extérieur formant le tronçon de pivotement (44') de la rondelle (26).

5. Ecrou (22) selon la revendication précédente, **caractérisé en ce que** la surface périphérique extérieure (48) est configurée pour permettre de faire pivoter la rondelle (26) à l'aide d'un outil.

6. Ecrou (22) selon la revendication 3 ou 5, **caractérisé en ce que** la surface périphérique extérieure (48) comprend au moins une portion extérieure (48.1) à section polygonale.

7. Ecrou (22) selon l'une des revendications précédentes, **caractérisé en ce que** le corps (24) et/ou la rondelle (26) comprennent au moins un épaulement (38, 38', 46) pour former une butée limitant la course de la rondelle (26) par rapport au corps (24) selon une direction parallèle à l'axe de pivotement (A36, A36').

8. Boulon comportant une tige (18) avec un tronçon fileté (18.1) ainsi qu'un écrou (22) selon l'une des revendications précédentes.

9. Assemblage comprenant un boulon selon la revendication précédente.

## Patentansprüche

1. Mutter (22) mit einem Körper (24), der ein Durchgangsloch (32) mit wenigstens einem mit einem Gewinde versehenen Innenabschnitt (34) aufweist, der so eingerichtet ist, dass die Mutter im Betrieb auf eine Stange (18) geschraubt werden kann, sowie einen zylindrischen Schwenkabschnitt (36, 36') mit einer Schwenkachse (A36, A36') aufweist, wobei die Mutter (22) eine Scheibe (26) umfasst, die einen Schwenkabschnitt (44, 44') aufweist, der so eingerichtet ist, dass er mit dem Schwenkabschnitt (36, 36') des Körpers (24) zusammenwirkt, so dass die Scheibe (26) relativ zum Körper (24) schwenken kann, sowie eine Durchgangsöffnung (42) mit einem glatten ersten inneren Abschnitt (42.1) mit einer Achse (A42.1) aufweist, wobei der Schwenkabschnitt (44, 44') der Scheibe (26) eine Schwenkachse (A44, A44') aufweist, die exzentrisch zu der Achse (A42.1) des ersten inneren Abschnitts (42.1) der Scheibe (26) ist und/oder wobei der mit einem Gewinde versehene Innenabschnitt (34) des Körpers (24) eine Einschraubachse (A34) aufweist, die exzentrisch zur Schwenkachse (A36, A36') des Schwenkabschnitts (36, 36') des Körpers (24) ist, wobei der erste Innenabschnitt (42.1) der Scheibe (26) einen solchen Querschnitt aufweist, dass, wenn eine Stange (18) in den mit einem Gewinde versehenen Innenabschnitt (34) im Betrieb eingeschraubt wird, der erste innere Abschnitt (42.1) in wenigstens einer ersten Winkelposition der Scheibe (26) nicht mit der Stange (18) interferiert und in wenigstens einer zweiten Winkelposition der Scheibe (26) mit der Stange (18) interferiert, wobei die Schwenkabschnitte des Körpers und der Scheibe (36, 36', 44, 44') im Betrieb koaxial sind, **dadurch gekennzeichnet, dass** der Schwenkabschnitt (36, 36') des Körpers (24) ein Außengewinde oder ein Innengewinde aufweist und dass der Schwenkabschnitt (44, 44') der Scheibe (26) ein Außengewinde oder ein Innengewinde aufweist, um ein Verschrauben der Scheibe (26) mit dem Körper (24) zu ermöglichen.

2. Mutter (22) nach Anspruch 1, **dadurch gekennzeichnet, dass** die Durchgangsöffnung (42) einen zweiten inneren Abschnitt aufweist, der den Schwenkabschnitt (44) der Scheibe (26) bildet.

3. Mutter (22) nach dem vorhergehenden Anspruch, **dadurch gekennzeichnet, dass** die Scheibe (26) eine äußere Umfangsfläche (48) aufweist, die so gestaltet ist, dass die Scheibe (26) mit einem Werkzeug gedreht werden kann.

4. Mutter (22) nach Anspruch 1, **dadurch gekennzeichnet, dass** die Scheibe (26) eine äußere Umfangsfläche (48) mit wenigstens einem äußeren Abschnitt aufweist, der den Schwenkabschnitt (44') der Scheibe (26) bildet.

5. Mutter (22) nach dem vorhergehenden Anspruch, **dadurch gekennzeichnet, dass** die äußere Umfangsfläche (48) so eingerichtet ist, dass die Scheibe (26) mit einem Werkzeug geschwenkt werden kann.

6. Mutter (22) nach Anspruch 3 oder 5, **dadurch gekennzeichnet, dass** die äußere Umfangsfläche (48) wenigstens einen äußeren Abschnitt (48.1) mit polygonalem Querschnitt aufweist.

7. Mutter (22) nach einem der vorhergehenden Ansprüche, **dadurch gekennzeichnet, dass** der Körper (24) und/oder die Scheibe (26) wenigstens eine Schulter (38, 38', 46) umfassen, um einen Anschlag zu bilden, der den Hub der Scheibe (26) in Bezug auf den Körper (24) in einer Richtung parallel zur Schwenkachse (A36, A36') begrenzt.

8. Bolzen mit einem Schaft (18) mit einem Gewindeabschnitt (18.1) sowie einer Mutter (22) nach einem der vorhergehenden Ansprüche.

9. Baugruppe mit einem Bolzen nach dem vorhergehenden Anspruch.

## Claims

1. Nut (22) comprising a body (24) having a through-hole (32) having at least one tapped interior portion (34) configured to enable the nut to be screwed onto a shank (18) in operation and a cylindrical pivoting portion (36, 36') having an axis of pivoting (A36, A36'), the nut (22) comprising a washer (26) having a pivoting portion (44, 44') configured to cooperate with the pivoting portion (36, 36') of the body (24) so that the washer (26) can pivot relative to the body (24), and a through-hole (42) comprising a first plain interior portion (42.1) having an axis (A42.1), the pivoting portion (44, 44') of the washer (26) having an axis of pivoting (A44, A44') that is eccentric with respect to the axis (A42.1) of the first interior portion (42.1) of the washer (26) and/or the tapped interior portion (34) of the body (24) having an axis of screw-fastening (A34) that is eccentric with respect to the axis of pivoting (A36, A36') of the pivoting portion (36, 36') of the body (24), the first interior portion (42.1) of the washer (26) comprising a cross section that is such that, when a shank (18) is screwed into the tapped interior portion (34) in operation, the first interior portion (42.1) does not interfere with the shank (18) in at least one first angular position of the washer (26) and does interfere with the shank (18) in at least one second angular position of the washer (26),
the pivoting portions of the body and of the washer (36, 36', 44, 44') being coaxial in operation, **characterized in that** the pivoting portion (36, 36') of the body (24) is threaded or tapped and **in that** the pivoting portion (44, 44') of the washer (26) is tapped or threaded so as to enable the washer (26) to be screwed onto the body (24).

2. Nut (22) according to Claim 1, **characterized in that** the through-hole (42) comprises a second interior portion forming the pivoting portion (44) of the washer (26).

3. Nut (22) according to the preceding claim, **characterized in that** the washer (26) comprises an exterior peripheral surface (48) configured to allow the washer (26) to be pivoted by means of a tool.

4. Nut (22) according to Claim 1, **characterized in that** the washer (26) comprises an exterior peripheral surface (48) having at least one exterior portion forming the pivoting portion (44') of the washer (26).

5. Nut (22) according to the preceding claim, **characterized in that** the exterior peripheral surface (48) is configured to allow the washer (26) to be pivoted by means of a tool.

6. Nut (22) according to Claim 3 or 5, **characterized in that** the exterior peripheral surface (48) comprises at least one exterior portion (48.1) of polygonal cross section.

7. Nut (22) according to one of the preceding claims, **characterized in that** the body (24) and/or the washer (26) comprise at least one shoulder (38, 38', 46) to form a stop limiting the travel of the washer (26) with respect to the body (24) in a direction parallel to the axis of pivoting (A36, A36').

8. Threaded fastener having a shank (18) with a threaded portion (18.1) and a nut (22) according to one of the preceding claims.

9. Assembly comprising a threaded fastener according to the preceding claim.
